# EUROPÄISCHE PATENTANMELDUNG

(11) **EP 1 178 409 A1**
(43) Veröffentlichungstag der Anmeldung: **06.02.2002**
(21) Anmeldenummer: 00116634.7
(22) Anmeldetag: 01.08.2000
(51) Int. Cl.: G06F 17/30

(54) **Cookiemanager zur Kontrolle des Cookietransfers in Internet-Client-Server Computersystem**

(71) Anmelder: DR. Riccardo Genghini Studio Notarile Genghini, 20121 Milano (IT); Köpsell, Stefan, 01099 Dresden (DE); Berthold, Oliver, 01099 Dresden (DE)
(72) Erfinder: Köpsell, Stefan, 01099 Dresden (DE); Berthold, Oliver, 01099 Dresden (DE)
(74) Vertreter: Körber, Martin, Dipl.-Phys.

(57) **Zusammenfassung**

Die vorliegende Erfindung betrifft ein Verfahren und Computersoftwareprodukt zur Verwaltung von Cookies in einem Internet-Client-Server-System, in welchem Cookies zwischen einem Serverrechner (17) und einem Clientrechner (11) per Internet (16) ausgetauscht werden, wobei ein Zurücksenden eines in einem Clientrechner (11) gespeicherten Cookies zu dem Serverrechner (17), der das Cookie gesetzt hatte, abhängig von einer vorangehenden Überprüfung des Cookie zugelassen wird. Weiterhin wird ein Clientrechner (11) für ein Internet-Client-Server-System vorgeschlagen, mit einer Schnittstelleneinrichtung zum Datenaustausch über das Internet, mindestens einer Speichereinrichtung (13) zum Speichern von Datenobjekten und einer Verwaltungseinrichtung zur Verwaltung von Cookies, wobei die Verwaltungseinrichtung (14) ein in der Speichereinrichtung (13) gespeichertes Cookie abhängig von einer vorangehenden Überprüfung zu dem Serverrechner (17) zurücksendet, der das Cookie gesetzt hatte.

Die vorliegende Erfindung ermöglicht es einem Teilnehmer am Internet, den Cookietransfer von und zu seinem Clientrechner in vorteilhafter Weise zu kontrollieren.

## Beschreibung

Die Erfindung betrifft die Kommunikation in Client-Server Computersystemen, speziell dem Internet, worin ein Serverrechner Statusinformationen an einen Clientrechner in Form eines Cookies sendet, die der Clientrechner zur späteren Rücksendung an den Serverrechner speichert, und worin Methoden zum Aufzeichnen der Nutzung eines heruntergeladenen Betriebsmittels und der an diesem vom Benutzer des Clientrechners vorgenommenen Aktionen angewandt werden.

Das World Wide Web (Web) ist das weitverbreiteste Informationssystem im Internet. Die Architektur des Web basiert auf einem konventionellen Client-Server-Modell, wobei sich der Begriff Client bzw. Clientrechner auf die generelle Rolle eines Computers als Anforderer nach Daten, der Begriff Server bzw. Serverrechner auf die generelle Rolle eines Computers als Anbieter von Daten in einem Netzwerk bezieht. Auf der Client-Seite ermöglicht ein Webbrowser (Browser) den Zugang zum Web und zu den auf den Serverrechnern bzw. Webservern des Web befindlichen Dokumenten. Ein an das Web angeschlossener Clientrechner (Webclient) kommuniziert mit einem Serverrechner mittels dem "Hyper Text Transfer Protokoll" (HTTP). Ein Browser öffnet eine Verbindung zu einem Serverrechner und startet eine Anfrage nach einem Dokument. Der Serverrechner liefert das angefragte Dokument typischerweise im Format eines in der "Hyper Text Markup Language" (HTML) codierten Textdokuments (Webseite). Nach Schließen der Verbindung bleibt der Serverrechner passiv, d.h. er kann den Webclient von sich aus zu keiner weiteren Aktion auffordern. Damit sind die Möglichkeiten einer interaktiven Kommunikation zwischen Server und Client im Web beschränkt. Seit Ende 1994 existiert jedoch ein Mechanismus, der es Prozessen auf der Server-Seite einer Webverbindung erlaubt Informationen auf der Client-Seite zu speichern und auch abzurufen. Dieser Mechanismus ist in der US 5 774 670 beschrieben. Hierzu werden eine oder mehrere Statusinformationen der HTTP-Antwort des Servers in Form eines Dokumentenkopfs vorangestellt. Diese Statusinformation wird generell als Cookie bezeichnet. Startet der Benutzer des Clientrechners, im folgenden Webteilnehmer oder Teilnehmer genannt, eine Anfrage an einen Serverrechner einer bestimmten Domäne, so werden zuvor die auf dem Clientrechner vorhandenen Cookies danach überprüft, ob sie dieser Domäne zugehörig sind und gegebenenfalls zusammen mit der Anfrage an den Serverrechner gesandt.

Ein HTML-Dokument kann Elemente enthalten, die nur als Verweis zu einem zugehörigen Betriebsmittel, das sich auf einem anderen Serverrechner befindet, ausgebildet sind. Wird eine dergestalte Webseite vom Teilnehmer aufgerufen, so werden ohne seine Einflußnahme automatisch weitere Dokumente von diesem und/oder anderen Serverrechnern angefordert, wodurch die, im ursprünglichen HTML-Dokument als Verweis angelegten Elemente, ausgefüllt werden. Dabei können Serverrechner, zu denen die Verbindung vermittelt über einen Verweis in der ursprünglich angeforderten Webseite aufgebaut wurde, ebenfalls Cookies an den Client übermitteln. Damit verliert der Teilnehmer die Kontrolle darüber, von welchen Serverrechnern und zu welchem Zweck Cookies an seinen Rechner gesandt werden, insbesondere da das Übertragen und Abspeichern der Cookies für den Teilnehmer nicht sichtbar erfolgt.

Diese Eigenheit des Cookiemechanismus kann im Internet zur Sammlung identitätsbezogener Daten genutzt werden. So kann z.B. der Weg eines Teilnehmers durch die Webseiten einer bestimmten Domäne und sein Verhalten darin verfolgt und aufgezeichnet werden. Die daraus gewonnenen Informationen werden teilweise zu einer teilnehmerspezifischen automatischen Anpassung der Einstiegseite oder auch der angebotenen Dienste ausgewertet. Dies ermöglicht es z.B. einem Anlageberater jedem seiner Kunden schon auf der ersten Seite die Kurse der Wertpapiere zu präsentieren, an denen der jeweilige Kunde in der Vergangenheit besonderes Interesse zeigte. Auch das e-Commerce-Verfahren beruht auf dem Cookiemechanismus. Dabei wird für jede Ware, die in den Warenkorb gelegt wird, ein Cookie an den Clientrechner übersandt und sobald die Bestellung aufgegeben werden soll, werden alle diese Cookies an den Serverrechner des Warenanbieters zurückgesandt und für die Ausarbeitung der Bestellung ausgewertet.

Da Cookies nur zu den Domänen zurückgesandt werden von denen sie an den Clientrechner gesandt wurden, spiegelt dieses Verfahren dem Teilnehmer eine gewisse, jedoch nicht gerechtfertigte Vertrauenswürdigkeit vor, denn, wie gezeigt, besitzt der Teilnehmer keine Kontrolle über die Domänen, von denen er Cookies erhält. Werberinge z.B. plazieren ihre Werbebanner nach dem oben beschriebenen Verfahren auf viele populäre Seiten des Internet. Dies führt dazu, daß der zentrale Server eines Werberings nun von vielen verschiedenen Webseiten aus angesprochen wird und Cookies an den Clientrechner übersenden kann. Jedem Aufruf einer Webseite mit einem Werbebanner dieses Werberings, folgt somit auch eine Anfrage an die Domäne des zentralen Werbeservers, mit der von ihm bereits früher versandte Cookies an ihn zurückgesandt werden bevor mit dem Werbebanner selbst ggf. wiederum ein neuer Cookie an den Clientrechner übermittelt wird. Die Inhalte der versandten Cookies werden in einer Datenbank des Werberings gespeichert und daraus ein Profil des Teilnehmers erstellt. Mit der Zeit bilden diese Profile ein aussagekräftiges Muster der Aktivitäten der Teilnehmer im Internet, aus denen auf die Gewohnheiten und Vorlieben der Teilnehmer geschlossen werden kann. Aus diesen Profilen werden, wie in US 5 991 735 und US 5 918 014 offenbart, demographische und psychographische Informationen über die Teilnehmer abgeleitet, auf die sich weitere Aktionen des Werberings, wie z.B. teilnehmerspezifische Angebote oder teilnehmerspezifische Werbeanzeigen, stützen. Je mehr verschiedene Internetseiten ein Werbebanner eines bestimmten Werberings aufweisen, desto besser können die Bewegungen des Teilnehmers im Internet verfolgt werden und um so umfangreicher werden die über ihn gesammelten Informationen. Damit wird auch die Aufzeichnung des Psychogramms eines Teilnehmers immer genauer und natürlich auch persönlicher.

Handelsübliche Browser bieten zwar die Möglichkeit den Umgang mit dem Cookiemechanismus zu konfigurieren, doch erfolgt dies in sehr beschränktem Umfang. Insbesondere bieten sie keine Möglichkeit den Austausch von Cookies transparent zu gestalten. Der Cookiemechanismus kann deaktiviert werden, doch werden damit z.B. ein Bewegen in Domänen mit beschränktem Zugang und auch e-Commerce unterbunden. Insbesondere kann mit den Möglichkeiten der Browsereinstellungen nicht zwischen einem Transfer erwünschter oder unerwünschter Cookies unterschieden werden.

Es ist daher Aufgabe der vorliegenden Erfindung, den oben genannten Nachteilen des Standes der Technik abzuhelfen, und es einem Teilnehmer am Internet zu ermöglichen, den Cookietransfer von und zu seinem Clientrechner zu kontrollieren, ohne daß er auf bestimmte über das Internet angebotene Dienste verzichten muß. Insbesondere ist es auch Aufgabe der vorliegenden Erfindung, es einem Teilnehmer am Internet zu ermöglichen, das Sammeln identitätsbezogener Daten über ihn zu unterlaufen.

Die Aufgabe wird durch ein Verfahren zur Verwaltung von Cookies in einem Internet-Client-Server-System, in welchem Cookies zwischen einem Serverrechner und einem Clientrechner per Internet ausgetauscht werden, wobei ein Zurücksenden eines in einem Clientrechner gespeicherten Cookies zu dem Serverrechner, der das Cookie gesetzt hatte, abhängig von einer vorangehenden Überprüfung des Cookie erfolgt, gelöst.

Weiterhin wird die Aufgabe durch ein Computersoftwareprodukt zur Verwaltung von Cookies in einem Internet-Client-Server-System, in welchem Cookies zwischen einem Serverrechner und einem Clientrechner per Internet ausgetauscht werden, wobei es ein Zurücksenden eines in einem Clientrechner gespeicherten Cookies zu dem Serverrechner, der das Cookie gesetzt hatte, abhängig von einer vorangehenden Überprüfung des Cookie zuläßt, gelöst.

Ferner wie die Aufgabe auch durch einen Clientrechner für ein Internet-Client-Server-System, mit einer Schnittstelleneinrichtung zum Datenaustausch über das Internet, mindestens einer Speichereinrichtung zum Speichern von Datenobjekten und einer Verwaltungseinrichtung zur Verwaltung von Cookies, wobei die Verwaltungseinrichtung ein in der Speichereinrichtung gespeichertes Cookie abhängig von einer vorangehenden Überprüfung zu dem Serverrechner, der das Cookie gesetzt hatte, zurücksendet, gelöst.

Vorteilhafte Weiterbildungen sind in den jeweiligen Unteransprüchen angegeben.

Nach einer bevorzugten Ausgestaltung erfolgt die Verwaltung und Überprüfung der auf einem Clientrechner zu speichernden und gespeicherten Cookies unabhängig von einem eine Internetverbindung zu einem Serverrechner herstellenden Browser des Clientrechners. In einer weiteren bevorzugten Ausgestaltung kann eine Überprüfung eines zurückzusendenden Cookies abhängig von einer konfigurierbaren Vorgabe im Clientrechner erfolgen. Ferner ist es besonders vorteilhaft das Ergebnis der Überprüfung eines Cookies abhängig von einer Bewertung der diesem Cookie zuzurechnenden Serverrechneradresse als erwünscht oder unerwünscht zu ermitteln, wobei direkt angewählte Adressen als erwünscht, indirekt angewählte Adressen als unerwünscht eingestuft werden.

Nach einer besonders vorteilhaften Ausgestaltung der Erfindung umfaßt das Format eines in einem Clientrechner gespeicherten Cookies einen ersten Datensatz mit Datenfeldern zur Aufnahme der originalen Daten des Cookies und einen zweiten Datensatz mit Datenfeldern für die Aufnahme zusätzlicher Daten, die der Überprüfung des Cookies dienen. Vorteilhaft kann dabei der zweite Datensatz einen ersten Subdatensatz mit Datenfeldern für die Aufnahme des Erstellungsdatums des Cookies und/oder der Bezeichnung des Cookies und/oder der Beschreibung des Cookies und/oder klassifizierender Stichwörter umfassen, wobei in einer weiteren bevorzugten Ausgestaltung dem zweiten Datensatz eines, zu einer von einem Browser gestellten Anfrage gültigen Cookies ein weiterer Subdatensatz mit Informationen zur Klassifizierung und Protokollierung der Anfrage hinzugefügt wird. Dabei ist es von besonderem Vorteil, wenn die angefügten weiteren Subdatensätze mindestens den Namen und die Internetadresse der unmittelbar aufgerufenen HTML-Seite, auf der sich das Objekt befand, das die Anfrage ausgelöst hatte, sowie den Zeitpunkt des Aufrufs enthalten.

In einer weiteren Ausgestaltung kann jeder Cookie oder eine Zusammenstellung mehrerer Cookies in separaten Dateien im Clientrechner gespeichert werden. In einer weiteren vorteilhaften Ausgestaltung der vorliegenden Erfindung werden diese Dateien zu und von mindestens einem weiteren Rechner übertragen, so daß ein Clientrechner über eine Vielzahl verschiedener zu einer Serverrechneradresse gültigen Cookies verfügt. Insbesondere können nach einer besonders vorteilhaften Ausgestaltung verschiedene Clientrechner Cookies in Datenbanken von verschiedenen Internet-Serverrechnern speichern, suchen und abrufen, so daß auf einem Clientrechner eine Vielzahl verschiedener zu einer Serverrechneradresse gültigen Cookies verfügbar sind, wobei nach einer weiteren Ausgestaltung der Erfindung vorteilhaft die Auswahl eines zurückzusendenden Cookie zufällig aus mehreren für diese Anfrage gültigen Cookies erfolgt.

Die Vorteile der vorliegenden Erfindung sind zum einen die dabei ermöglichte Kontrolle des Cookietransfers über Internetverbindungen durch den Teilnehmer, zum anderen die Möglichkeit, ein Zurücksenden der Cookies von konfigurierbaren Bewertungskriterien abhängig zu gestalten. Darüber hinaus bietet die Aufzeichnung von Daten zur Beschreibung der Cookies und des Auslösers ihrer Übersendung zusammen mit der anschließenden Aufzeichnung der weiteren Verwendung der Cookies den Vorteil, daß dem Teilnehmer transparent gemacht werden kann, auf welchen Serverrechnern welche Art von Daten über ihn gesammelt werden. Der erfindungsgemäße Austausch von Cookies zwischen den einzelnen Clientrechnern ermöglicht dem Teilnehmer alternativ zu "seinen" Cookies nach einem Zufallsprinzip selektierte Fremdcookies an ausgewählte Serverrechner zurückzusenden, so daß die über ihn zusammengestellten Daten wertlos gemacht werden, wobei vor allem der Einsatz von Cookieservern zur automatischen Organisation des Cookieaustausches dafür eine weltweite Basis, weit über den Bekanntenkreis einer Person hinaus schafft.

Im folgenden wird die vorliegende Erfindung unter Bezug auf die beiliegenden Zeichnungen näher erläutert, in denen zeigen
Figur 1 schematisch ein Internet-Client-Server-System, in welchem die vorliegende Erfindung verwirklicht ist,
Figur 2 ein schematisches Diagramm eines Cookie-Formats gemäß der vorliegenden Erfindung,
Figur 3 ein Flußdiagramm zur Erläuterung des erfindungsgemäßen Verfahrens zur Verwaltung von Cookies, und
Figur 4 ein Schema zur Darstellung der Synchronisation von Daten zwischen einem Cookiemanager und einem Cookieserver entsprechend einer weiteren bevorzugten Ausgestaltung der Erfindung.

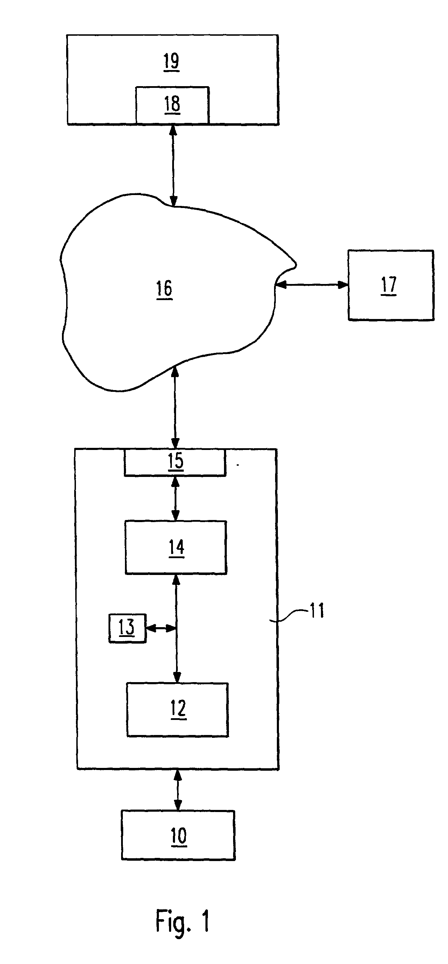

Figur 1 zeigt schematisch ein Internet-Client-Server-System zur Erläuterung des Aufbaus einer Verbindung eines Teilnehmers am Internet zu einem Serverrechner gemäß der vorliegenden Erfindung. Ein Teilnehmer 10 stellt mit Hilfe des auf seinem Clientrechner 11 installierten Webbrowsers 12 eine Verbindung mit einem Serverrechner 17 über das Internet 16 her. Gemäß der vorliegenden Erfindung befindet sich auf dem Client ein, im folgenden als Cookiemanager bezeichnetes, Computersoftwareprodukt 14, das in den Datenstrom zwischen dem Browser und dem Internet geschaltet ist. Dieser Cookiemanager analysiert alle vom Browser ausgehenden und alle vom Internet eingehenden Daten. Enthält ein vom Internet gesandtes Dokument einen Cookie, so wird dieser vom Cookiemanager herausgefiltert und nicht an den Browser weitergegeben. Abhängig von der vom Teilnehmer vorgenommenen Konfiguration wird der Cookie gegebenenfalls gespeichert, andernfalls wird er entfernt. Grundlage dieser Entscheidung ist eine Bewertung des Cookie als erwünscht oder unerwünscht. Dies wird anhand der Adresse die den Cookie übersendet ermittelt, so daß das Kriterium für die Bewertung des Cookies sich darauf reduziert, ob er von einer erwünschten Adresse oder von einer unerwünschten Adresse gesendet wurde.

Geht man davon aus, daß der Teilnehmer am Internet gemäß seinen Wünschen und Neigungen Anfragen nach Dokumenten über das Internet stellt, so können Anfragen, die durch seine Aktionen direkt ausgelöst werden, als erwünschte Anfragen betrachtet werden, während indirekt durch seine Aktionen ausgelöste Anfragen, wie z.B. das Nachladen von Elementen oder Objektinhalten der von ihm aufgerufenen Webseite, als unerwünscht betrachtet werden. Um zu erkennen, ob ein Cookie über eine direkt durch die Teilnehmeraktion ausgelöste Anfrage oder vermittels des Nachladens von Elementen an den Client gesendet wurde, kann es vorteilhaft sein, einen Teil des Cookiemanagers in das Browserprogramm des Client zu integrieren. Bei einer anderen Ausgestaltung des Cookiemanagers unabhängig vom Browserprogramm des Client, erfaßt der Cookiemanager die Adresse der ersten Anfrage des Teilnehmers und speichert diese als gewünschte Adresse. Wird nun ein Cookie von dem Serverrechner mit dieser ersten Adresse an den Client zurückgesandt, so wird dieser Cookie als gewünscht beurteilt und auf dem Clientrechner gespeichert. Alle, dieser von dem Teilnehmer direkt initiierten ersten Anfrage automatisch folgenden weiteren Anfragen werden, ebenso wie eventuell von diesen Adressen übersandte Cookies als unerwünscht eingestuft. In einer weiteren vorteilhaften Ausgestaltung der vorliegenden Erfindung wird geprüft, ob die Anfrage eine normale HTML-Seite oder ein eingebettetes Objekt, welches normalerweise automatisch nachgeladen wird, zum Ziel hat. Im ersten Fall erhält der von der Adresse übersandte Cookie die Bewertung 'erwünscht', im zweiten Fall 'unerwünscht'.

Die Bewertung eines Cookies kann auch über die Identifizierung der Typen der zu ladenden Objekte erfolgen. Zum einen kann hierzu die Dateierweiterung des zu ladenden Objekts verwendet werden, zum anderen ein vom HTML-Standard zur Verfügung gestellter Content-Typ. Da der Content-Typ allerdings erst in der Antwort des Servers enthalten ist, wird ein entsprechender Eintrag in den zweiten Datensatz des Cookies erst nach Erhalt der HTML-Seite vorgenommen.

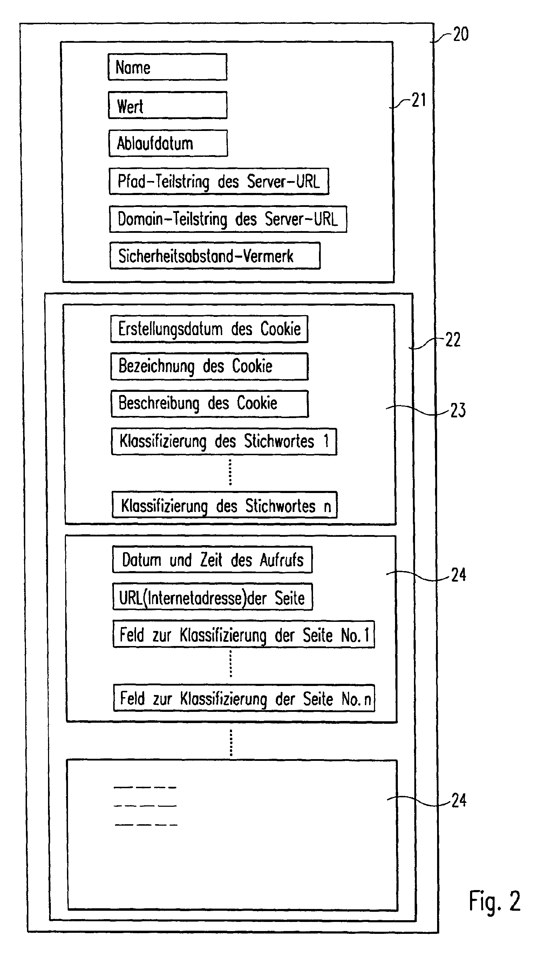

Zum sicheren Erkennen der ursprünglich aufgerufenen Seite müssen zusätzlich drei Spezialfälle unterschieden und erkannt werden. Hat ein Server seine Adresse geändert, so kann unter der alten Adresse eine Webseite geschaltet werden, die den Browser anweist, automatisch die neue Adresse aufzurufen. Dieses, als Redirect bezeichnete Verfahren wird von dem Cookiemanager erkannt und die neue Adresse des Serverrechners in den Nutzungsdatensatz 24 (Figur 2) des Cookie eingetragen. Besteht eine aufgerufene Webseite aus mehreren Teilfenstern, sogenannten Frames, so wird durch die Anfrage des Teilnehmers nur eine Seite aufgerufen, die ihrerseits die Ladebefehle für die weiteren Seiten enthält, die in den jeweiligen Frames geladen werden. Der Cookiemanager erkennt diese Sonderform von Folgeaufrufen und trägt die Ladebefehle in den Nutzungsdatensatz 24 (Figur 2) des Cookie der ursprünglich geladenen Seite ein. Durch die Verwendung aktiver Inhalte kann der Serverrechner den Browser veranlassen, zusätzliche Objekte entweder durch Aktionen des Teilnehmers oder aber automatisch zu laden. Wird das Laden des Objekts durch eine Eingabe des Teilnehmers veranlaßt, so wird die Adresse des Objektes in den Nutzungsdatensatz des Cookie eingetragen. Läßt sich jedoch die aktive Einflußnahme des Teilnehmers nicht ermitteln und/oder wird das Objekt automatisch geladen, so wird in diesen beiden letztgenannten Fällen die Adresse der ursprünglich aufgerufenen Seite im Nutzungsdatensatz des Cookie aufgezeichnet. Das Entscheidungskriterium basiert auf der Annahme, daß in der Regel Teilnehmeraktionen durch Klicken auf einen Link, d.h. einen Verweis auf eine andere Seite, ausgelöst werden. Einflußnahmen des Teilnehmers lassen sich nun darüber verifizieren ob auf einer vorangegangenen Seite die Adresse der Anfrage als Link enthalten war. Gibt der Teilnehmer die Adresse direkt ein, dann ist die HTTP-Kopfzeile 'Referrer' nicht wie im vorangegangenen Fall vorhanden. Der Eintrag im Referrer kann damit als Entscheidungskriterium verwendet werden.

Findet der Cookiemanager im eingehenden Datenstrom einen Cookie, so wird dieser, sofern es die vom Teilnehmer vorgenommene Konfiguration zuläßt, gespeichert. Die Speicherung erfolgt in dem in Figur 2 dargestellten Cookie-Format 20. Dieses Format setzt sich aus drei unterschiedlichen Datensätzen zusammen, wobei der erste Datensatz 21 die originalen Daten des Cookies, wie er vom Serverrechner an den Clientrechner gesendet wurde, enthält. Dem schließt sich ein Datensatz 22 an, deren erster Subdatensatz 23 Datenfelder betreffend der Eigenschaften des Cookies enthält. Daran schließen sich Datensätze 24 an, die die Nutzung des Cookies im Laufe seiner Verwendung charakterisieren. Der originale Datensatz 21 enthält Datenfelder für die Aufnahme des Namens und des Wertes des Cookie, jene beiden Elemente des Cookie die bei Anfragen an den Serverrechner, der den Cookie setzte, zurückgesandt werden. Weitere Datenfelder enthalten das Ablaufdatum des Cookie, den Pfadteilstring sowie den Domänenteilstring der Serverrechneradresse und einen Vermerk ob das Zurücksenden des Cookies über eine sichere Verbindung zum Serverrechner erfolgen soll. Der Datensatz 23, der die Eigenschaften des Cookies beschreibt, enthält Datenfelder zur Aufnahme des Erstellungsdatums, einer Bezeichnung, einer Beschreibung und mehrere Datenfelder in denen Stichwörter zur Klassifizierung des Cookies aufgenommen werden können. Wird eine Anfrage über das Internet an eine Serverrechneradresse gerichtet, für die ein Cookie auf dem Client vorliegt, und läßt es die vom Teilnehmer vorgenommene Konfiguration zu, so werden die für diese Adresse gültigen Cookies an den Serverrechner zurückgesandt. In diesem Fall wird dem, vom Cookieserver im vorangehend beschriebenen Format gespeicherten Cookie ein neuer Nutzungsdatensatz 24 hinzugefügt, in dessen Datenfeldern Datum und Zeitpunkt des Aufrufs sowie die Internetadresse URL der aufgerufenen Seite enthalten sind und, mehrere Datenfelder mit klassifizierenden Informationen über die aufgerufene Seite. Bei wiederholter Verwendung des Cookies wird diesem erneut ein weiterer Nutzungsdatensatz 24 hinzugefügt, so daß die Summe der Nutzungsdatensätze als Verwendungsnachweis des Cookie dienen, bzw. als Informationsquelle über die Daten, die über den Teilnehmer gesammelt wurden, ausgewertet werden können.

Die Datenfelder können zur Klassifizierung der aufgerufenen Seite die Ergebnisse der oben beschriebenen Ermittlung bzw. Überprüfung, ob es sich um eine erwünschte oder unerwünschte Adresse handelte, enthalten. Generell kann auch der Eintrag im Referrer zur Ermittlung der eigentlich aufgerufenen Seite in einem dieser Datenfelder enthalten sein.

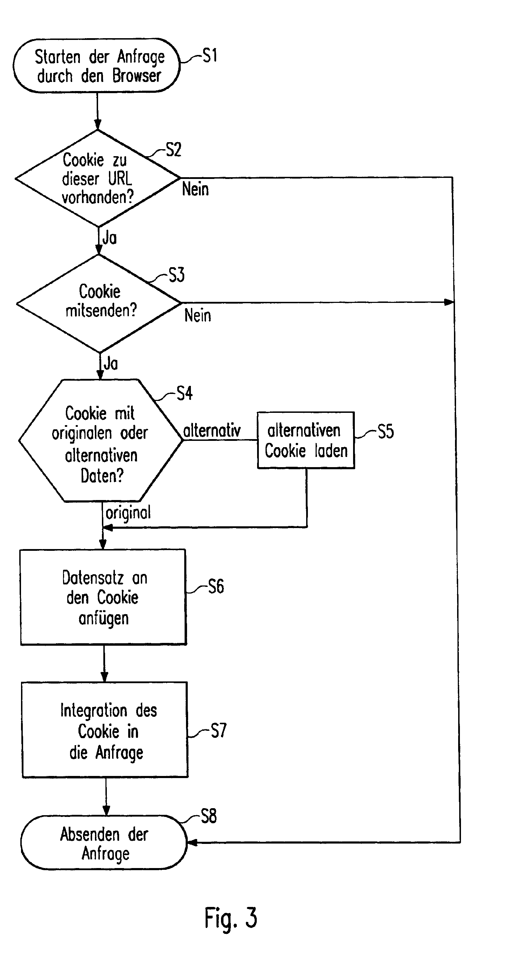

Die Figur 3 zeigt den Einfluß des Cookiemanagers auf den Cookiemechanismus bei Anfrage des Browsers an einen Serverrechner. Startet der Browser eine Anfrage an das Internet in einem Schritt S1, so prüft der Cookiemanager in einem Schritt S2, ob zu der angefragten Adresse ein gültiger Cookie vorhanden ist. Ist dies nicht der Fall, so wird die Anfrage in einem Schritt S8 an das Internet weitergeleitet. Ist ein Cookie vorhanden, so wird in einem Schritt S3 die vom Teilnehmer vorgenommene Konfiguration überprüft und eventuell der Teilnehmer direkt befragt. Ist das Ergebnis der Überprüfung negativ, so geht die Verarbeitung zu Schritt S8 über und die Anfrage des Browsers wird ohne Anhängen eines Cookies an das Internet weitergeleitet. War das Ergebnis der Überprüfung positiv, so wird in einem Schritt S4 ermittelt, ob der Original-Cookie, oder ein alternativer Cookie mit Fehlinformationen verwendet werden soll, der in diesem Fall in einem Schritt S5 geladen wird. In beiden Fällen wird in einem nachfolgenden Schritt S6 dem Cookie-Format ein weiterer Nutzungsdatensatz 24 hinzugefügt, und schließlich werden in einem Schritt S7 Name und Wert des Cookie in die Anfrage des Browsers integriert und im Schritt S8 an das Internet weitergeleitet.

Würde sich die Nutzerkonfiguration nur darauf beschränken, daß kein Cookie an eine unerwünschte Adresse gesendet wird, so hätte dies lediglich zur Folge, daß die Betreiber von zentralen Datenbanken zur Sammlung identitätsbezogener Daten keine weiteren Daten über den Teilnehmer aufnehmen könnten. Bereits gesammelte Daten blieben jedoch authentisch. Der in vielen Staaten illegalen Überwachung der Teilnehmer kann aber am besten dadurch begegnet werden, daß in diese zentralen Datenbanken gezielt Fehlinformationen eingespeist werden. Die Betreiber von Werbeservern gehen davon aus, daß jeder Cookie nur auf genau einem Rechner gespeichert ist. In anderen Worten, empfängt ein Serverrechner zusammen mit einer Anfrage einen Cookie, so nimmt er an, daß er die Identität des Teilnehmers widerspiegelt. Wird statt dessen ein Cookie mit der Identität für einen anderen Teilnehmer zurückgesandt, so wird der Datensatz in der zentralen Datenbank zur Sammlung identitätsbezogener Daten unbrauchbar. Weiterhin ist es für den Betreiber einer solchen Datenbank nicht direkt erkennbar, welche Einträge in seiner Datenbank fehlerhaft gemacht wurden. Bei einem weitverbreiteten Einsatz des Cookiemanagers, würde somit die gesamte Datenbank des Betreibers nahezu wertlos werden, da potentiell jeder Eintrag fehlerhaft sein könnte. Um dies zu ermöglichen, wird in einer weiteren Ausgestaltung der vorliegenden Erfindung die Konfigurationsmöglichkeit durch den Teilnehmer so erweitert, daß wenn er z.B. als ein Teilnehmer mit ganz bestimmten Eigenschaften erkannt werden will, er die Daten des originalen Cookies an den Serverrechner zurücksenden läßt oder er im Falle einer unerwünschten Adresse angeben kann ob für diese Verbindung kein Cookie oder ein passender zufällig ausgewählter Cookie eines anderen Teilnehmers zurückgesandt werden soll.

Der Cookiemanager verwaltet die Cookies derart, daß für jede Adresse eines Serverrechners eine beliebige Anzahl Cookies alternativ verwendbar sind. Dabei erfolgt die Verwendung von Cookies verschiedener Clients in zufälliger Auswahl über eine Import- und Exportschnittstelle des vorliegenden Cookiemanagers. Jeder Cookie oder eine Zusammenstellung mehrerer Cookies kann in externen Dateien gespeichert und so leicht zu anderen Rechnern übertragen werden. Die Übertragung kann z.B. per Email oder über die Rechner eines local area network LAN erfolgen. Nach einer besonders vorteilhaften Ausgestaltung der vorliegenden Erfindung kann der Austausch der Cookies über sogenannte Cookieserver erfolgen, wodurch die Cookies über den Bekanntenkreis einer Person hinaus weltweit ausgetauscht werden können. Unter einem Cookieserver wird ein Rechner verstanden, der an das Internet angeschlossen ist, und der Cookies von Cookiemanagern empfängt und alternative Cookies an diese Cookiemanager zurückleitet. Diese Up- und Downloads können dabei direkt zwischen den einzelnen Cookiemanagern und dem bzw. den Cookieservern über eine spezielle Internet-Schnittstelle 15,18 erfolgen. Die von den Cookiemanagern im oben beschriebenen Format erhaltenen Cookies werden auf dem Cookieserver in einer Datenbank gespeichert. Auf dieser Datenbank definierte Suchfunktionen ermöglichen die gezielte Auswahl von Cookies mit bestimmten Eigenschaften und das automatische Herunterladen von Cookies für die Verbindung mit einem bestimmten Serverrechner. Damit Betreiber von zentralen Datenbanken für das Sammeln identitätsbezogener Daten die Cookieserver nicht effizient abfragen können, um z.B. fehlerhafte Datensätze in ihren Datenbanken zu identifizieren, sind auf dem Cookieserver keine Suchfunktionen nach dem Cookie-Namen und/oder den Cookie-Werten möglich. Weiterhin wird ein Cookie nur an eine beschränkte Anzahl von Teilnehmern weitergeleitet, wird diese Anzahl überschritten, so wird der Cookie entweder gelöscht oder gesperrt. Dies verhindert, daß ein Serverrechner "seine" Cookies erkennen und entsprechend reagieren kann. Aus diesem Grunde übernehmen in einer besonders vorteilhaften Ausgestaltung der vorliegenden Erfindung mehrere unabhängige, zumindest zum Teil nicht öffentliche bekannte Cookieserver den Austausch alternativer Cookies. Die einzelnen Cookies werden nur eine beschränkte Zeitspanne auf einem Cookieserver gehalten und nach Ablauf dieser gelöscht. Damit wird sichergestellt, daß sich auf einem Cookieserver keine Informationen über einzelne Teilnehmer ansammeln können, insbesondere auch indem jeder Cookiemanager seine Cookies mit einer Reihe von Servern austauscht, und somit jeder Cookieserver nur einen Bruchteil der Nutzungsdaten erhält.

Der Schutz der Teilnehmerdaten kann in einer weiteren Ausgestaltung der vorliegenden Erfindung dadurch erreicht werden, daß jeder Cookiemanager so konfiguriert wird, daß nur ein beliebiger Anteil der Felder in den Nutzungsdatensätzen an den Cookieserver übertragen wird, somit ein Teilnehmer nicht gezwungen ist, seine Nutzungsdaten einem ihm vielleicht nicht völlig vertrauenswürdigen Cookieserver zu übergeben. Um die Vertrauenswürdigkeit eines Cookieservers sicherzustellen, sollte sich dieser unter Verwendung digitaler Zertifikate gegenüber dem Cookiemanager authentifizieren. Eine weitere Möglichkeit zum Schutz der Teilnehmerdaten, die auch zusätzlich zu der oben beschriebenen verwendet werden kann, ist ein Zugriff auf den Cookieserver über Anonymisierungsdienste. Da die meisten verfügbaren Anonymisierungsdienste auf Basis des World Wide Web oder e-Mail arbeiten, sollte die Internet-Schnittstelle so ausgelegt werden, daß sie durch diese Protokolle getunnelt werden kann.

Wird ein Cookie in mehreren Cookiemanagern gleichzeitig gespeichert, werden natürlich nur jeweils die lokal anfallenden Nutzungsdatensätze 24 hinzugefügt. In anderen Worten, gleiche Cookies weisen aufgrund ihrer Verwendung auf unterschiedlichen Clients unterschiedliche Nutzungsdatensätze, und damit nur ein Teilbild ihrer vollständigen Verwendung auf. Um die Protokollierung der Verwendung eines Cookies zu vervollständigen, verfügt der Cookieserver über eine Möglichkeit zur Synchronisation der Daten. Die entsprechenden Synchronisationsmechanismen werden sowohl von den Cookiemanagern als auch von den Cookieservern unterstützt. Auch die spezielle Internet-Schnittstelle 15, 18 über die der Austausch der Cookies zwischen den Cookiemanagern und den Cookieservern erfolgt, unterstützt entsprechende Funktionen des Synchronisationsmechanismus.

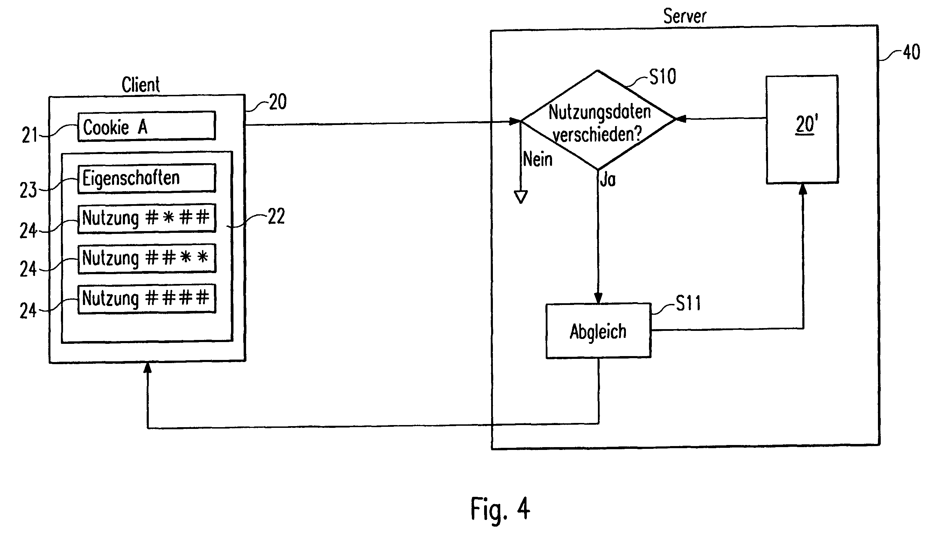

In der Figur 4 ist der Fall dargestellt, daß ein Cookiemanager einen Cookie 20 an einen Cookieserver 40 überträgt, und in der Antwort des Cookieservers an den Cookiemanager die in diesem Cookie noch nicht enthaltenen, Datensätze zurückgesendet werden. Um diese Datensätze zu ermitteln, vergleicht der Synchronisationsmechanismus des Cookieserver in einem ersten Schritt S10 die Nutzungsdatensätze des vom Cookiemanager übertragenen Cookies 20 mit denen des auf dem Server vorhandenen Cookies 20' und bildet, falls die beiden Nutzungsdatensätze verschieden sind, in einem Abgleich-Schritt S11 die Summe beider Nutzungsdatensätze und entfernt von dieser Summe die Nutzungsdatensätze, die in dem vom Cookiemanager übertragenen Cookie bereits enthalten waren. Der Teilnehmer erhält somit eine umfassende Übersicht über die Verwendung des entsprechenden Cookies. Durch die alternative Verwendung zufällig ausgewählter Cookies anderer Teilnehmer der ganzen Welt, vermischen sich die Teilnehmerprofile in den Datenbanken zur Speicherung identitätsbezogener Daten auf den entsprechenden Internet-Serverrechnern in solcher Weise, daß die Betreiber derartiger Datenbanken fehlerhafte Datensätze nicht erkennen können, und die gespeicherten Daten damit potentiell für sie wertlos werden.

## Patentansprüche

1. Verfahren zur Verwaltung von Cookies in einem Internet-Client-Server-System, in welchem Cookies zwischen einem Serverrechner (17) und einem Clientrechner (11) per Internet (16) ausgetauscht werden,
**dadurch gekennzeichnet,**
**daß** ein Zurücksenden eines in einem Clientrechner (11) gespeicherten Cookies zu dem Serverrechner (17), der das Cookie gesetzt hatte, abhängig von einer vorangehenden Überprüfung des Cookie erfolgt.

2. Verfahren zur Verwaltung von Cookies in einem Internet-Client-Server-System nach Anspruch 1,
**dadurch gekennzeichnet,**
**daß** die Verwaltung und Überprüfung der, auf einem Clientrechner zu speichernden und gespeicherten Cookies unabhängig von einem eine Internetverbindung zu einem Serverrechner herstellenden Browser (12) des Clientrechners erfolgt.

3. Verfahren zur Verwaltung von Cookies in einem Internet-Client-Server-System nach einem der Ansprüche 1 oder 2,
**dadurch gekennzeichnet,**
**daß** eine Überprüfung eines zurückzusendenden Cookies abhängig von konfigurierbaren Bewertungskriterien im Clientrechner erfolgt.

4. Verfahren zur Verwaltung von Cookies in einem Internet-Client-Server-System nach einem der Ansprüche 1 bis 3,
**dadurch gekennzeichnet,**
**daß** das Ergebnis der Überprüfung eines Cookie abhängig von einer Bewertung der diesem Cookie zuzurechnenden Serverrechneradresse als erwünscht oder unerwünscht ermittelt wird, wobei direkt angewählte Adressen als erwünscht, indirekt angewählte Adressen als unerwünscht eingestuft werden.

5. Verfahren zur Verwaltung von Cookies in einem Internet-Client-Server-System nach einem der Ansprüche 1 bis 4,
**dadurch gekennzeichnet,**
**daß** das Format (20) eines in einem Clientrechner gespeicherten Cookies einen ersten Datensatz (21) mit Datenfeldern zur Aufnahme der originalen Daten des Cookies und einen zweiten Datensatz (22) mit Datenfeldern für die Aufnahme zusätzlicher Daten, die der Überprüfung des Cookies dienen, umfaßt.

6. Verfahren zur Verwaltung von Cookies in einem Internet-Client-Server-System nach Anspruch 5,
**dadurch gekennzeichnet,**
**daß** der zweite Datensatz (22) einen ersten Subdatensatz (23) mit Datenfeldern für die Aufnahme des Erstellungsdatums des Cookies und/oder der Bezeichnung des Cookies und/oder der Beschreibung des Cookies und/oder klassifizierender Stichwörter umfaßt.

7. Verfahren zur Verwaltung von Cookies in einem Internet-Client-Server-System nach einem der Ansprüche 5 oder 6,
**dadurch gekennzeichnet,**
**daß** dem zweiten Datensatz (22) eines, zu einer von einem Browser (12) gestellten Anfrage gültigen Cookies ein weiterer Subdatensatz (24) mit Informationen zur Klassifizierung und Protokollierung der Anfrage hinzugefügt wird.

8. Verfahren zur Verwaltung von Cookies in einem Internet-Client-Server-System nach Anspruch 7,
**dadurch gekennzeichnet,**
**daß** die angefügten weiteren Subdatensätze (24) mindestens den Namen und die Internetadresse der unmittelbar aufgerufenen HTML-Seite, auf der sich das Objekt befand, das die Anfrage ausgelöst hatte, sowie den Zeitpunkt des Aufrufs enthalten.

9. Verfahren zur Verwaltung von Cookies in einem Internet-Client-Server-System nach einem der Ansprüche 5 bis 8,
**dadurch gekennzeichnet,**
**daß** jeder Cookie oder eine Zusammenstellung mehrerer Cookies in separaten Dateien im Clientrechner (11) gespeichert werden.

10. Verfahren zur Verwaltung von Cookies in einem Internet-Client-Server-System nach Anspruch 9,
**dadurch gekennzeichnet,**
**daß** diese Dateien zu und von mindestens einem weiteren Rechner übertragen werden, so daß ein Clientrechner (11) über eine Vielzahl verschiedener zu einer Serverrechneradresse gültigen Cookies verfügt.

11. Verfahren zur Verwaltung von Cookies in einem Internet-Client-Server-System nach Anspruch 10,
**dadurch gekennzeichnet,**
**daß** verschiedene Clientrechner (11) Cookies in Datenbanken von verschiedenen Internet-Serverrechnern (19) speichern, suchen und abrufen, so daß auf einem Clientrechner (11) eine Vielzahl verschiedener zu einer Serverrechneradresse gültigen Cookies verfügbar sind.

12. Verfahren zur Verwaltung von Cookies in einem Internet-Client-Server-System nach einem der Ansprüche 10 oder 11,
**dadurch gekennzeichnet,**
**daß** die Auswahl eines zurückzusendenden Cookie zufällig aus mehreren für diese Anfrage gültigen Cookies erfolgt.

13. Computersoftwareprodukt zur Verwaltung von Cookies in einem Internet-Client-Server-System, in welchem Cookies zwischen einem Serverrechner (17) und einem Clientrechner (11) per Internet (16) ausgetauscht werden,
**dadurch gekennzeichnet,**
**daß** es ein Zurücksenden eines in einem Clientrechner (11) gespeicherten Cookies zu dem Serverrechner (17), der das Cookie gesetzt hatte, abhängig von einer vorangehenden Überprüfung des Cookie zuläßt.

14. Computersoftwareprodukt zur Verwaltung von Cookies in einem Internet-Client-Server-System nach Anspruch 13,
**dadurch gekennzeichnet,**
**daß** es die auf einem Clientrechner zu speichernden und gespeicherten Cookies unabhängig von einem eine Internetverbindung zu einem Serverrechner herstellenden Browser (12) des Clientrechners verwaltet und überprüft.

15. Computersoftwareprodukt zur Verwaltung von Cookies in einem Internet-Client-Server-System nach einem der Ansprüche 13 oder 14,
**dadurch gekennzeichnet,**
**daß** es eine Überprüfung des zurückzusendenden Cookie abhängig von konfigurierbaren Bewertungskriterien im Clientrechner vornimmt.

16. Computersoftwareprodukt zur Verwaltung von Cookies in einem Internet-Client-Server-System nach einem der Ansprüche 13 bis 15,
**dadurch gekennzeichnet,**
**daß** es das Ergebnis der Überprüfung eines Cookies abhängig von einer Bewertung der diesem Cookie zuzurechnenden Serverrechneradresse als erwünscht oder unerwünscht ermittelt, wobei direkt angewählte Adressen als erwünscht, indirekt angewählte Adressen als unerwünscht eingestuft werden.

17. Computersoftwareprodukt zur Verwaltung von Cookies in einem Internet-Client-Server-System nach einem der Ansprüche 13 bis 16,
**dadurch gekennzeichnet,**
**daß** es einen Cookie in einem Clientrechner in einem Format (20) bestehend aus einem ersten Datensatz (21) mit Datenfeldern zur Aufnahme der originalen Daten des Cookie und einem zweiten Datensatz (22) mit Datenfeldern für die Aufnahme zusätzlicher Daten, die der Überprüfung des Cookie dienen, speichert.

18. Computersoftwareprodukt zur Verwaltung von Cookies in einem Internet-Client-Server-System nach Anspruch 17,
**dadurch gekennzeichnet,**
**daß** es im zweiten Datensatz (22) einen ersten Subdatensatz (23) mit Datenfeldern für die Aufnahme des Erstellungsdatums des Cookie und/oder der Bezeichnung des Cookie und/oder der Beschreibung des Cookie und/oder klassifizierender Stichwörter bereitstellt.

19. Computersoftwareprodukt zur Verwaltung von Cookies in einem Internet-Client-Server-System nach einem der Ansprüche 17 oder 18,
**dadurch gekennzeichnet,**
**daß** es dem zweiten Datensatz (22) eines zu einer von einem Browser (12) gestellten Anfrage gültigen Cookie einen weiteren Subdatensatz (24) mit Informationen zur Klassifizierung und Protokollierung der Anfrage hinzufügt.

20. Computersoftwareprodukt zur Verwaltung von Cookies in einem Internet-Client-Server-System nach Anspruch 19,
**dadurch gekennzeichnet,**
**daß** es in den angefügten weiteren Subdatensätzen (24) mindestens den Namen und die Internetadresse der unmittelbar aufgerufenen HTML-Seite, auf der sich das Objekt befand, das die Anfrage ausgelöst hatte, sowie den Zeitpunkt des Aufrufs aufnimmt.

21. Computersoftwareprodukt zur Verwaltung von Cookies in einem Internet-Client-Server-System nach einem der Ansprüche 17 bis 20,
**dadurch gekennzeichnet,**
**daß** es jeden Cookie oder eine Zusammenstellung mehrerer Cookies in separaten Dateien im Clientrechner (11) speichert.

22. Computersoftwareprodukt zur Verwaltung von Cookies in einem Internet-Client-Server-System nach Anspruch 21,
**dadurch gekennzeichnet,**
**daß** es diese Dateien zu und von anderen Rechnern zu überträgt, so daß ein Clientrechner (11) über eine Vielzahl verschiedener zu einer Serverrechneradresse gültigen Cookies verfügt.

23. Computersoftwareprodukt zur Verwaltung von Cookies in einem Internet-Client-Server-System nach einem der Ansprüche 21 oder 22,
**dadurch gekennzeichnet,**
**daß** es einen zurückzusendenden Cookie aus mehreren für diese Anfrage gültigen Cookies zufällig auswählt.

24. Computersoftwareprodukt zur Verwaltung von Cookies auf einem Cookieserver (19) eines Internet-Client-Server-Systems,
**dadurch gekennzeichnet,**
**daß** es Cookies der Formate (20) nach einem der Ansprüche 18 bis 20 in einer Datenbank des Cookieservers speichert, und
Computersoftwareprodukten nach einem der Ansprüche 22 oder 23 ermöglicht, beliebige Cookies in diese Datenbank zu speisen, in dieser Datenbank zu suchen und aus dieser Datenbank abzurufen.

25. Cookieserver zur Verwaltung von Cookies in einem Internet-Client-Server-System,
**dadurch gekennzeichnet,**
**daß** er eine Datenbank zur Speicherung von Cookies der Formate (20) nach einem der Ansprüche 18 bis 20 aufweist, und es Computersoftwareprodukten nach einem der Ansprüche 22 oder 23 ermöglicht, beliebige Cookies in diese Datenbank zu speisen, in dieser Datenbank zu suchen und aus dieser Datenbank abzurufen.

26. Clientrechner (11) für ein Internet-Client-Server-System, mit einer Schnittstelleneinrichtung zum Datenaustausch über das Internet, mindestens einer Speichereinrichtung (13) zum Speichern von Datenobjekten und einer Verwaltungseinrichtung zur Verwaltung von Cookies, wobei
die Verwaltungseinrichtung (14) ein in der Speichereinrichtung (13) gespeichertes Cookie abhängig von einer vorangehenden Überprüfung zu dem Serverrechner (17) zurücksendet, der das Cookie gesetzt hatte.

27. Clientrechner (11) nach Anspruch 26,
**dadurch gekennzeichnet,**
**daß** die Verwaltungseinrichtung (14) die in der Speichereinrichtung (13) gespeicherten bzw. zu speichernden Cookies unabhängig von einem eine Internetverbindung zu einem Serverrechner herstellendem Browser (12) des Clientrechners verwaltet.

28. Clientrechner (11) nach einem der Ansprüche 26 oder 27,
**dadurch gekennzeichnet,**
**daß** die Verwaltungseinrichtung (14) eine Überprüfung des Cookies abhängig von konfigurierbaren Bewertungskriterien im Clientrechner vornimmt.

29. Clientrechner (11) nach einem der Ansprüche 26 bis 28,
**dadurch gekennzeichnet,**
**daß** die Verwaltungseinrichtung (14) das Ergebnis der Überprüfung eines Cookie abhängig von einer Bewertung der diesem Cookie zuzurechnenden Serverrechneradresse als erwünscht oder unerwünscht ermittelt, wobei direkt angewählte Adressen als erwünscht, indirekt angewählte Adressen als unerwünscht eingestuft werden.

30. Clientrechner (11) nach einem der Ansprüche 26 bis 29,
**dadurch gekennzeichnet,**
**daß** die Verwaltungseinrichtung (14) ein Format (20) zur Speicherung eines Cookie in der Speichereinrichtung (13) mit einem ersten Datensatz (21) mit Datenfeldern zur Aufnahme der originalen Daten des Cookie und einem zweiten Datensatz (22) mit Datenfeldern für die Aufnahme zusätzlicher Daten die der Überprüfung des Cookies dienen bereitstellt.

31. Clientrechner (11) nach Anspruch 30,
**dadurch gekennzeichnet,**
**daß** die Verwaltungseinrichtung (14) im zweiten Datensatz (22) einen ersten Subdatensatz (23) mit Datenfeldern für die Aufnahme des Erstellungsdatums des Cookies und/oder der Bezeichnung des Cookies und/oder der Beschreibung des Cookies und/oder für klassifizierende Stichwörter bereitstellt.

32. Clientrechner (11) nach einem der Ansprüche 30 oder 31,
**dadurch gekennzeichnet,**
**daß** die Verwaltungseinrichtung (14) dem zweiten Datensatz (22) eines zu einer von einem Browser (12) gestellten Anfrage gültigen Cookies einen weiteren Subdatensatz (24) mit Informationen zur Klassifizierung und Protokollierung der Anfrage hinzufügt.

33. Clientrechner (11) nach Anspruch 32,
**dadurch gekennzeichnet,**
**daß** die von der Verwaltungseinrichtung (14) angefügten weiteren Subdatensätze (24) mindestens den Namen und die Internetadresse der unmittelbar aufgerufenen HTML-Seite, auf der sich das Objekt befand, das die Anfrage ausgelöst hatte, sowie den Zeitpunkt des Aufrufs enthalten.

34. Clientrechner (11) nach einem der Ansprüche 30 bis 33,
**dadurch gekennzeichnet,**
**daß** die Verwaltungseinrichtung (14) jeden Cookie oder eine Zusammenstellung mehrerer Cookies in separaten Dateien in der Speichereinrichtung speichert.

35. Clientrechner (11) nach Anspruch 34,
**dadurch gekennzeichnet,**
**daß** die Verwaltungseinrichtung (14) diese Dateien zu mindestens einem weiteren Rechner überträgt und von mindestens einem weiteren Rechner empfängt, so daß der Clientrechner (11) über eine Vielzahl verschiedener zu einer Serverrechneradresse gültigen Cookies verfügt.

36. Clientrechner (11) nach Anspruch 35,
**dadurch gekennzeichnet,**
**daß** mittels der Verwaltungseinrichtung (14) auf verschiedenen Clientrechnern (11) Cookies von diesen Clientrechnern (11) in Datenbanken von verschiedenen Internet-Serverrechnern (19) gespeichert, darin gesucht und abgerufen werden können.

37. Clientrechner (11) nach einem der Ansprüche 35 oder 36,
**dadurch gekennzeichnet,**
**daß** die Verwaltungseinrichtung (14) einen zurückzusendenden Cookie zufällig aus einer Sammlung mehrerer für diese Anfrage gültigen Cookies auswählt.
